# EUROPEAN PATENT APPLICATION

(11) **EP 2 833 457 A1**
(43) Date of publication of application: **04.02.2015**
(21) Application number: 13769022.8
(22) Date of filing: 22.03.2013
(51) Int. Cl.: H01M 8/06, H01M 8/04, H01M 8/12

(54) **FUEL CELL MODULE AND FUEL CELL SYSTEM**

(30) Priority: 26.03.2012 JP 2012070089
(71) Applicant: JX Nippon Oil & Energy Corporation, Chiyoda-ku Tokyo 100-8162 (JP)
(72) Inventor: SATO, Yasushi, Tokyo 100-8162 (JP); MIYOSHI, Kota, Tokyo 100-8162 (JP); NAKAGAWA, Kojiro, Tokyo 100-8162 (JP); KOBORI, Yoshihiro, Tokyo 100-8162 (JP)
(74) Representative: Algemeen Octrooi- en Merkenbureau B.V.
(86) International application number: PCT/JP2013/001965
(87) International publication number: WO 2013/145674

(57) **Abstract**

This fuel cell module (20) is provided with fuel cells (110), a dehydrogenation reaction unit (132) which performs a dehydrogenation reaction of a hydrogenated product of an aromatic compound, a hydrogen separation unit (134) which separates the hydrogen generated by the dehydrogenation reaction unit (132) from the dehydrogenated product of the hydrogenated product, a hydrogen supply unit (140) which supplies the hydrogen separated in the hydrogen separation unit (134) to the fuel cells (110), and a unit frame (100) that houses the fuel cells (110), the dehydrogenation reaction unit (132), the hydrogen separation unit (134), and the hydrogen supply unit (140). The dehydrogenation reaction unit (132) is heated by the heat generated in the fuel cells (110) and/or the heat generated by combustion of off-gas from the fuel cells (110).

## Description

### TECHNICAL FIELD

The present invention relates to both a fuel cell module that generates power by using a benzene-ring hydrogenated product (hydride) of an aromatic compound and a fuel cell system including the fuel cell module.

### BACKGROUND ART

Traditionally, utilization of renewable energy, such as solar power and wind power, has been widely studied. Supply areas of such renewable energy and consuming areas thereof are mostly far from each other. Energy supply areas are mostly located in less-populated areas such as deserts and mountainous regions, while energy consuming areas are mostly located in urban regions. Accordingly, it is not efficient to transmit power from an energy supply area to a consuming area with power transmission networks as a transmission method, but it is desirable to transmit it by converting into chemical energy.

Liquid hydrogen or high-pressure hydrogen gas can be considered as a candidate for chemical energy carrier. However, liquid hydrogen or high-pressure hydrogen gas needs energy for the liquefaction or compression, and hence it is disadvantageous in terms of energy conversion efficiency. Further, liquid hydrogen or high-pressure hydrogen gas has the problem that an energy density per weight or volume is remarkably lower than that of liquid fossil fuel such as petroleum.

On the other hand, utilization of so-called organic hydrides as chemical energy carrier is currently considered to be promising. That is, aromatic compounds that can be reversibly hydrogenated, which are represented by benzene, toluene, and naphthalene, etc., are subjected to a hydride-producing reaction by using the power obtained from natural energy in an area where the natural energy is abundant. Thereby, the aromatic compounds are converted into cyclic organic compounds represented by cyclohexane, methylcyclohexane, and decalin, namely, organic hydrides. The organic hydrides are then transported to a consuming area. In the consuming area, hydrogen is taken out by a dehydrogenation reaction of the organic hydride, thereby allowing the obtained hydrogen to be used for energy conversion such as power generation. Further, a dehydrogenated product of the organic hydride, which is produced after the dehydrogenation reaction, namely, an aromatic compound, is recovered and transported to an energy supply area, thereby allowing it to be used again as an energy medium.

By thus using an organic hydride as an energy medium, an energy conversion/transportation recycling model can be achieved. In this energy conversion/transportation model, for example, in a toluene-methylcyclohexane based organic hydride, the ratio of the weight of the hydrogen that can be reversibly transported to the weight of the whole transportable medium is more than 7%. Accordingly, when an organic hydride is used, a weight energy density, comparable to that of liquid hydrogen or high-pressure hydrogen of approximately 70 MPa, can be obtained in relatively mild conditions in which cooling and a high-pressure container are not required.

As a method of adding hydrogen to a dehydrogenated product of an organic hydride, a method can be cited, in which hydrogen is obtained by performing electrolysis of water with the use of the power obtained, for example, from solar power generation or wind power generation, and an organic hydride is then obtained by using the hydrogen obtained by this electrolysis. Also, a method without using hydrogen gas is also reported, in which an organic hydride is obtained by sending gas, which is obtained by vaporizing a dehydrogenated product of an organic hydride, directly onto an electrode (see Non-Patent Document 1).

On the other hand, as a method of reversibly obtaining, in a consuming area and from an organic hydride, available energy such as electric power, that is, as a method of dehydrogenating an organic hydride so as to recover and reuse most of dehydrogenated products, a method is exclusively proposed, in which hydrogen gas is separated from an organic hydride by a dehydrogenation reaction, so that a power generating device, such as a fuel cell, is operated by the obtained hydrogen gas. For example, Patent Document 1 discloses a structure in which a dehydrogenating device, used for producing hydrogen by a dehydrogenation reaction of an organic hydride, and a fuel cell, using as fuel the hydrogen produced by the dehydrogenating device, are combined together.

A direct type fuel cell, in which power can be generated by using the hydrogen held by an organic hydride without going through a hydrogen separation reaction of the organic hydride, is devised (see Non-Patent Documents 2 and 3, Patent Document 2); however there is still great room for improvement in: power generation characteristics represented by a current density per electrode geometric area and voltage characteristic per cell; power (power density) available per electrode geometric area; and the like, and hence practical power density and energy conversion efficiency are not yet satisfied simultaneously.

### Related Art Documents

### Patent Documents

[Patent Document 1] Japanese Patent Application Publication No. 2005-203266
[Patent Document 2] U.S. Patent Application Publication No. 2008/0152960

### Non-Patent Documents

[Non-Patent Document 1] Masaru Ichikawa, J. Jpn. Inst. Energy, vol. 85, 517 (2006)
[Non-Patent Document 2] Physical Chemistry Chemical Physics, 8, 1724-1730 (2006)
[Non-Patent Document 3] Z. Shi, J. Power Sources, 176, 122-127 (2008)

### DISCLOSURE OF THE INVENTION

### PROBLEM TO BE SOLVED BY THE INVENTION

In the aforementioned method of separating hydrogen gas from an organic hydride by a dehydrogenation reaction, it is necessary to externally supply an amount of heat that is generated by a certain combustion reaction, etc., and is required for the dehydrogenation reaction, because the dehydrogenation reaction is an endothermic reaction. The aforementioned Patent Document 1 discloses that exhaust heat from a fuel cell is used as the heat of reaction for the dehydrogenation reaction.

On the other hand, the present inventors have recognized that there is room for improvement in the traditional structures in terms of efficiently causing a dehydrogenation reaction of an organic hydride and power generation by a fuel cell to proceed.

The present invention has been made in view of these challenges and a purpose of the invention is to provide a technique in which a dehydrogenation reaction of an organic hydride and power generation by a fuel cell can be caused to proceed efficiently.

### MEANS FOR SOLVING THE PROBLEM

An aspect of the present invention is a fuel cell module. The fuel cell module comprises: a fuel cell; a dehydrogenation reaction part that performs a dehydrogenation reaction of a hydride of an aromatic compound; a hydrogen separator that separates hydrogen produced in the dehydrogenation reaction part from a dehydrogenated product of the hydride; a hydrogen supplier that supplies the hydrogen separated in the hydrogen separator to the fuel cell; and a single housing that houses the fuel cell, the dehydrogenation reaction part, the hydrogen separator, and the hydrogen supplier, in which the dehydrogenation reaction part is heated by at least one of the heat generated in the fuel cell and the heat generated by combustion of offgas from the fuel cell.

Another aspect of the present invention is a fuel cell system. The fuel cell system comprises: the fuel cell module of the aforementioned aspect; a condenser that condenses the gaseous dehydrogenated product separated in the hydrogen separator; and a dehydrogenated product containing tank that contains the liquid dehydrogenated product produced by the condenser.

### ADVANTAGE OF THE INVENTION

According to the present invention, a technique can be provided, in which a dehydrogenation reaction of an organic hydride and power generation by a fuel cell can be caused to proceed efficiently.

### BRIEF DESCRIPTION OF THE DRAWINGS

Fig. 1 is a schematic view illustrating a schematic structure of a fuel cell system according to Embodiment 1;
Fig. 2 is a schematic view illustrating a schematic structure of a fuel cell module;
Fig. 3 is a sectional view, taken along A-A Line in Fig. 2;
Fig. 4 is a conceptual view for explaining the sizes of a pedestal and a reaction vessel;
Figs. 5(A) to 5(C) are schematic views for explaining the shape of a film in a hydrogen separator;
Fig. 6 is a graph showing the relationship between gauge pressure in a dehydrogenation reaction part and hydrogen flow rates in the hydrogen separator; and
Fig. 7 is a schematic view illustrating a schematic structure of a fuel cell system according to Embodiment 2.

### BEST MODE FOR CARRYING OUT THE INVENTION

Hereinafter, preferred embodiments of the present invention will be described with reference to the drawings. In the drawings, like numerals represent like constituting elements and the description thereof will be appropriately omitted.

### (Embodiment 1)

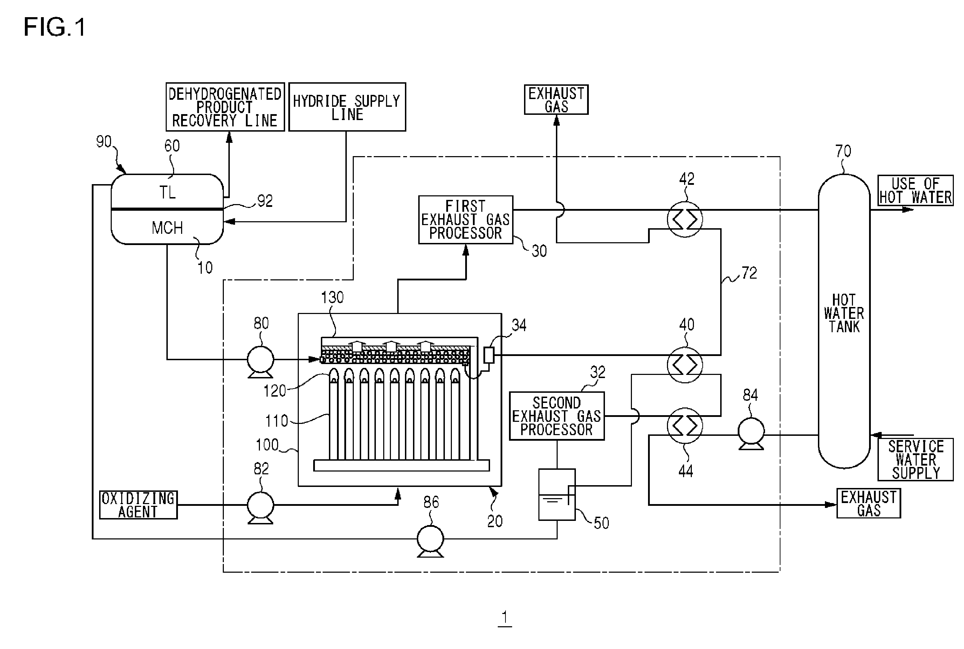

Fig. 1 is a schematic view illustrating a schematic structure of a fuel cell system according to Embodiment 1. As illustrated in Fig. 1, a fuel cell system 1 according to the present embodiment includes a hydride storage tank 10, a fuel cell module 20, a first exhaust gas processor 30, a second exhaust gas processor 32, a first heat exchanger 40, a second heat exchanger 42, a third heat exchanger 44, a condenser 50, a dehydrogenated product containing tank 60, and a hot water tank 70.

The hydride storage tank 10 stores a hydride of an aromatic compound that is to be supplied to the fuel cell module 20, namely, an organic hydride. The organic hydride to be stored in the hydride storage tank 10 is supplied from an external hydride supply line. The organic hydride to be used in the fuel cell system 1 according to the present embodiment is not particularly limited, as far as it is an organic compound to/from which hydrogen can be added/desorbed by reversibly causing hydride-producing reaction/dehydrogenation reaction; and acetone-isopropanol based organic hydrides, benzoquinone-hydroquinone based organic hydrides, and aromatic compound based organic hydrides including aromatic hydrocarbons, etc., can be widely used. Among them, aromatic compound-based organic hydrides represented by toluene-methylcyclohexane based organic hydrides are preferred from the viewpoints of: transportability during energy transportation, toxicity, safety, storage stability, an amount of hydrogen that can be transported per volume or weight, ease of adding hydrogen to a dehydrogenated product of an organic hydride, ease of performing a dehydrogenation reaction from a hydride, and an energy conversion efficiency in which a change in the Gibbs free energy is not remarkably large, etc.

A hydride of an aromatic compound that can be used as the organic hydride is, for example, a compound whose at least one benzene ring is hydrogenated. Specifically, hydrides of, for example, benzene, naphthalene, anthracene, diphenylethane, pyridine, pyrimidine, pyrazine, quinoline, isoquinoline, N-alkylpyrrole, N-alkylindole, N-alkyldibenzopyrrole, and the like, can be cited. From 1 to 4 hydrogen atoms of an aromatic ring in the aforementioned compounds may be replaced by alkyl groups. However, the "alkyl" in the aforementioned aromatic compounds is a C₁₋₆ straight or branched alkyl group. Examples of the benzene include, for example: alkylbenzenes such as toluene and ethyl benzene; dialkylbenzenes such as xylene and diethylbenzene; and trialkylbenzenes such as mesitylene. Examples of the naphthalene include alkyl naphthalenes such as methylnaphthalene. It is preferable that the aromatic compounds and the hydrides thereof are liquids at normal temperature, from the viewpoint that the structures of the hydride storage tank 10 and the fuel cell module 20 can be simplified. When a mixture of two or more of the aforementioned compounds is used, the mixture should be a liquid.

For example, when a toluene-methylcyclohexane based organic hydride is used, three hydrogen molecules can be taken out from one methylcyclohexane (hydride) molecule. Because the characteristics of the toluene-methylcyclohexane based organic hydride are similar to those of petroleum such as gasoline, it can be treated in the same way as traditional liquid fuel. Hereinafter, a hydride of an aromatic compound, i.e., an organic hydride will be appropriately referred to as a "hydride." Additionally, a dehydrogenated product of a hydride, i.e., a dehydrogenated product of an organic hydride will be referred to as a "dehydrogenated product." Hereinafter, the present embodiment will be described by using methylcyclohexane (hereinafter, appropriately referred to as "MCH") as an example of a hydride and toluene (hereinafter, appropriately referred to as "TL") as an example of a dehydrogenated product.

MCH as a hydride is sent out to the fuel cell module 20 from the hydride storage tank 10 by a pump 80.

The fuel cell module 20 includes a housing 100, a fuel cell 110, a combustion part 120, and a reaction vessel 130, etc. The fuel cell 110, the combustion part 120, and the reaction vessel 130 are housed in the single housing 100 and are integrated with each other. MCH supplied from the hydride storage tank 10 flows into the reaction vessel 130. A dehydrogenation reaction of the MCH is performed in the reaction vessel 130, and thereby hydrogen and TL are produced. The produced hydrogen gas is separated from the gaseous TL and is supplied to the fuel cell 110. An oxidizing agent, such as air, is also supplied to the fuel cell 110 from the outside by a pump 82. The fuel cell 110 generates power by an electrochemical reaction with the use of the supplied hydrogen and oxidizing agent, and discharges offgas to an internal space of the housing 100. The combustion part 120 combusts the offgas in the internal space. The structure of the fuel cell module 20 will be described in detail later.

The combustion exhaust gas, produced by the combustion of the offgas by the combustion part 120, is discharged to the first exhaust gas processor 30. The first exhaust gas processor 30 has a combustion catalyst made by supporting, for example, Pt, and Pd, etc., on a support such as alumina, silica, or the like. The first exhaust gas processor 30 combusts the combustion exhaust gas by making it contact the combustion catalyst to reduce the CO concentration in the combustion exhaust gas, and releases the gas in the open air.

The gaseous TL, separated from hydrogen in the reaction vessel 130, is sent out to the condenser 50 as a gas-liquid separator after passing through a pressure regulator 34. Mixed gas containing, in addition to the gaseous TL, unseparated hydrogen, unreacted MCH, by-products such as methane and benzene, and the like is sent out to the condenser 50 from the reaction vessel 130. The pressure regulator 34 is formed, for example, by an orifice, a needle valve, and a capillary tube, etc. The pressure of the mixed gas, which has been high in the reaction vessel 130, is released in the pressure regulator 34 and becomes approximately normal pressure on the downstream side of the pressure regulator 34. Accordingly, the structure of the condenser 50 can be simplified. The gaseous TL becomes a liquid by being condensed in the condenser 50, so that it is separated from other gas. The separated liquid TL is sent out to the dehydrogenated product containing tank 60 from the condenser 50 by a pump 86, and is contained in the tank 60. The TL contained in the dehydrogenated product containing tank 60 is sent out to an external dehydrogenated product recovery line, and is used again for hydrogen transportation as a dehydrogenated product of an organic hydride.

The fuel cell system 1 of the present embodiment has a single tank 90 whose inside is divided into two spaces by a partition wall 92. One space in the tank 90 forms the hydride storage tank 10, while the other space forms the dehydrogenated product containing tank 60. The partition wall 92 is movable such that the capacity of each of the hydride storage tank 10 and the dehydrogenated product containing tank 60 can be changed in accordance with containing amounts of MCH and TL.

In the condenser 50, the gas separated from the liquid TL is sent out to the second exhaust gas processor 32. The second exhaust gas processor 32 has the same structure as that of the first exhaust gas processor 30, and combusts the gas sent from the condenser 50 by making it contact the combustion catalyst and release the gas in the open air.

The hot water tank 70 is a storage tank for storing heat recovery water as a heat medium. Service water is externally supplied to the hot water tank 70. A circulating flow channel 72 is provided in the hot water tank 70. A pump 84 is provided in the circulating flow channel 72, so that the heat recovery water in the hot water tank 70 is sent out to the circulating flow channel 72 by the pump 84 and is returned again to the hot water tank 70 after passing through the circulating flow channel 72. The third heat exchanger 44, the first heat exchanger 40, and the second heat exchanger 42 are provided in the circulating flow channel 72 in this order from the upstream side in a direction in which the heat recovery water flows.

In the third heat exchanger 44, heat exchange is performed between the exhaust gas sent out from the second exhaust gas processor 32 and the heat recovery water sent out from the hot water tank 70, so that the heat recovery water is heated by the exhaust gas. This heat recovery water is sent out to the first heat exchanger 40 provided on the downstream side of the third heat exchanger 44. In the first heat exchanger 40, heat exchange is performed between the mixed gas containing the gaseous TL, the mixed gas being discharged from the reaction vessel 130, and the heat recovery water, so that the heat recovery water is further heated. The heat recovery water heated in the first heat exchanger 40 is sent out to the second heat exchanger 42 provided on the downstream side of the first heat exchanger 40. In the second heat exchanger 42, heat exchange is performed between the combustion exhaust gas of offgas, the combustion exhaust gas being completely combusted in the first exhaust gas processor 30, and the heat recovery water, so that the heat recovery water is further heated. The heat recovery water that has passed through the second heat exchanger 42 is returned to the hot water tank 70. Thereby, hot water is stored in the hot water tank 70.

The hot water stored in the hot water tank 70 is sent outside to be used for heating and hot water supply, etc. Accordingly, the fuel cell system 1 according to the present embodiment forms a cogeneration system in which exhaust heat is recovered from the fuel cell module 20, etc., and is used for heating and hot water supply, etc.

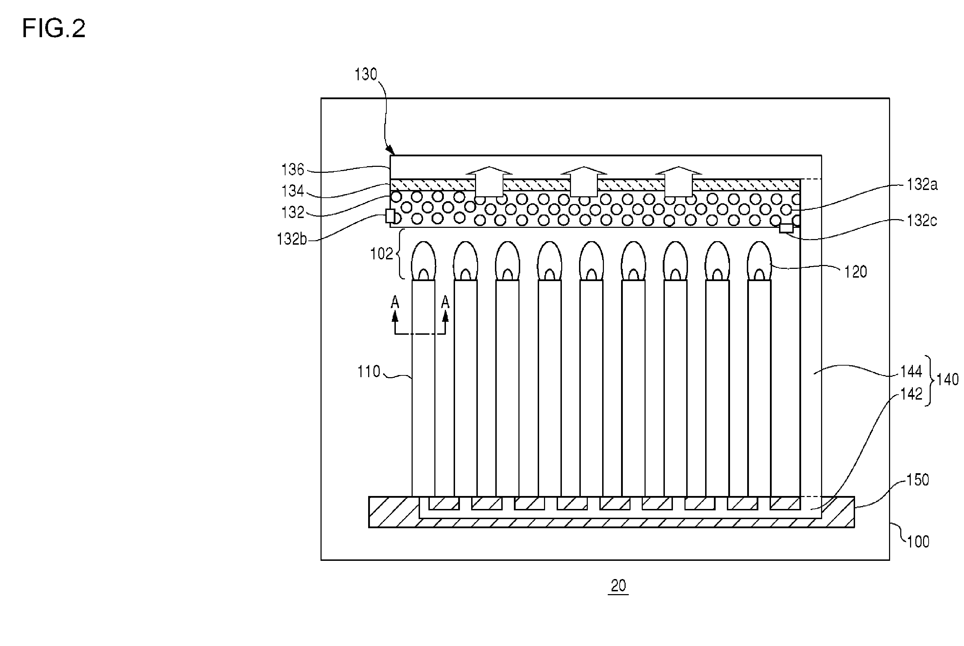

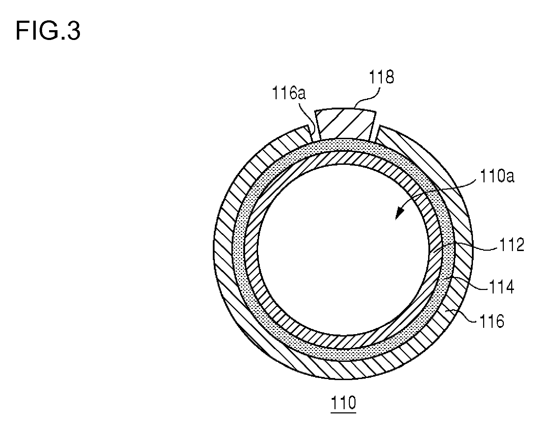

Subsequently, the structure of the fuel cell module 20 according to the present embodiment will be described in detail. Fig. 2 is a schematic view illustrating the schematic structure of the fuel cell module. Fig. 3 is a sectional view, taken along A-A Line in Fig. 2. The fuel cell module 20 according to the embodiment includes, in addition to the aforementioned housing 100, fuel cell 110, combustion part 120, and reaction vessel 130, a hydrogen supplier 140 and a pedestal 150.

The fuel cell 110 is a power generating device that performs an electrochemical reaction by using the supplied hydrogen and oxidizing agent. The fuel cell 110 functions also as a heat source that supplies, to the reaction vessel 130, an amount of heat required for the dehydrogenation reaction of a hydride. In order to exhibit the function as this heat source, it is preferable that the fuel cell 110 is one that operates at a temperature higher than or equal to the lower limit temperature (e.g., 250°C) of the dehydrogenation reaction of a hydride. Herein, the operating temperature of a fuel cell means a typical temperature in a power generator of the fuel cell. For example, in a cell stack form in which a plurality of power generation cells are laminated, the temperature at a place near to its center is preferably used as the operating temperature.

Preferred examples of the fuel cell that satisfies this requirement include: high-temperature fuel cells such as a solid oxide fuel cell (SOFC) and molten carbonate fuel cell (MCFC) ; and moderate temperature fuel cells such as a phosphoric acid fuel cell (PAFC), fuel cell using a phosphoric acid impregnated electrolyte, and moderate temperature type polymer electrolyte fuel cell (MT-PEFC). An SOFC that can be operated in a moderate temperature range of from 300 to 600°C is particularly preferred. Among SOFCs, the fuel cells, which operate in relatively low temperature ranges of their operating temperature ranges, are now intensively being developed by various researchers, and large numbers of both the solid electrolyte materials, which conduct oxygen ions or protons in the above temperature regions, and air electrode catalyst materials have been reported (Koichi Eguchi Supervision, "Development of Solid Oxide Fuel Cell (SOFC)", CMC Publishing, p 122-p 173). As the fuel cell 110, an anode-supported tubular type SOFC (Journal of Power Sources, Volume 199, 1 February 2012, Pages 117-123, Naoki Watanabe, Toshiharu Ooe, Tatsumi Ishihara), which uses, as an example, an LSGM (LaSrGaMgO)-based electrolyte, is preferably used.

When an SOFC is used as the fuel cell, the operating temperature range thereof is preferably from 300 to 600°C, and more preferably from 350 to 550°C. By making the operating temperature of the fuel cell 300°C or higher, an amount of heat required for the dehydrogenation reaction can be more surely provided. By making the operating temperature 600°C or lower, an excessive supply of heat to the reaction vessel 130 can be avoided, and accordingly a side reaction and a situation in which the supplied heat cannot be effectively utilized in the reaction vessel 130 can be prevented from proceeding or occurring.

The fuel cell 110 of the present embodiment is a tubular type SOFC. Alternatively, the fuel cell 110 may be a tubular flat-plate type, etc. The fuel cell 110 is mounted on a major surface of the pedestal 150. In the embodiment, a plurality of the fuel cells 110 are mounted on the pedestal 150. A hydrogen flow channel 142, which forms part of the hydrogen supplier 140, is provided in the pedestal 150, and the fuel cell 110 is connected to the hydrogen supplier 140 with one end (lower end) of the fuel cell 110 being connected to the hydrogen flow channel 142. The fuel cell 110 protrudes upward on the pedestal 150 and the other end (upper end) is opened in a lower space 102 located, in the internal space of the housing 100, below the reaction vessel 130.

Each fuel cell 110 has a structure in which a hydrogen circulation space 110a having a tubular shape is located at its center and an anode 112, an electrolyte layer 114, and a cathode 116 are laminated in this order around the space 110a. That is, the hydrogen circulation space 110a is formed by the inner circumferential surface of the anode 112. A slit 116a is provided in the cathode 116 and along the shaft direction of the fuel cell 110 such that a current collector 118 is provided in the slit 116a.

The hydrogen supplied from the hydrogen supplier 140 is supplied to the anode 112 from the inner circumferential surface of the anode 112 while flowing inside the hydrogen circulation space 110a from the one end to the other end of the fuel cell 110. The remaining hydrogen, which has not been supplied to the anode 112, is discharged, as offgas, from the other end of the fuel cell 110 to the lower space 102 in the housing 100. The air as an oxidizing agent, supplied into the housing 100 by the pump 82, is supplied to the cathode 116 from the outer circumferential surface of the cathode 116, the outer circumferential surface being exposed to the internal space of the housing 100.

When the hydrogen and air are supplied, the electrode reaction indicated by the following equation (1) is caused at the anode 112. On the other hand, the electrode reaction indicated by the following equation (2) is caused at the cathode 116.

Anode: H₂ + O²⁻ → H₂O + 2e⁻ (1)

Cathode: 1/2O₂ + 2e⁻ → O²⁻ (2)

At the anode 112, the supplied hydrogen emits electrons, which produce water by reacting with the oxygen ions that have moved through the electrolyte layer 114 from the cathode 116, as indicated by the above equation (1). The electrons move to the cathode 116 after passing through an external circuit (not illustrated). On the other hand, at the cathode 116, the oxygen contained in the supplied air react with the electrons that have moved from the anode 112 side to become an oxygen ion, as indicated by the above equation (2). The oxygen ions move through the electrolyte layer 114 toward the anode 112. Because electrons thus move from the anode 112 toward the cathode 116 in the external circuit, power can be taken out.

The combustion part 120 is formed by publicly-known combustion devices such as a burner, and is arranged on the other end side of the fuel cell 110, namely, arranged in the lower space 102. The combustion part 120 combusts, in the lower space 102, mixed gas containing both the offgas discharged from the open end of the fuel cell 110 and the air as an oxidizing agent that is present in the internal space of the housing 100. The heat generated by the combustion of the offgas is supplied to the reaction vessel 130 located above the lower space 102. Thereby, the temperature of the reaction vessel 130 can be more surely maintained at a temperature suitable for the dehydrogenation reaction of a hydride.

In the present embodiment, the reaction vessel 130 is heated by the heat generated while the fuel cell 110 is generating power and by the heat generated while the offgas from the fuel cell 110 is being combusted; however the combustion part 120 can be omitted, when an amount of heat required for the dehydrogenation reaction of a hydride can be sufficiently secured by the heat generated in the fuel cell 110. Additionally, in the embodiment, the amount of heat required for the dehydrogenation reaction of a hydride is supplied to the reaction vessel 130 by combusting surplus fuel gas, which has not been used in the fuel cell 110, with the combustion part 120 being provided. Accordingly, it is not always necessary that the operating temperature of the fuel cell 110 is higher than the lower limit temperature of the dehydrogenation reaction of a hydride. However, it is preferable that the operating temperature of the fuel cell 110 is set to be higher than or equal to the lower limit temperature of the dehydrogenation reaction as in the embodiment, from the viewpoint of more surely securing the amount of heat required for the dehydrogenation reaction.

Additionally, in order to efficiently perform heat exchange, it is preferable to spatially arrange the fuel cell 110 or the combustion part 120, which is a heat generation point, and the reaction vessel 130 (in more detail, the later-described dehydrogenation reaction part), which is a decalescent point, close to each other as much as possible. In the present embodiment, the tubular type fuel cell 110 is adopted, and one end portion thereof, from which offgas is discharged, is arranged in the lower space 102 located below the reaction vessel 130, and the combustion part 120 is also arranged in the lower space 102. Thereby, the heat generated in the fuel cell 110 or the combustion part 120 can be efficiently transmitted to the reaction vessel 130.

In the present embodiment, the fuel cell 110 having a tubular shape, such as a tubular type, tubular flat-plate type, or the like, is adopted because it is preferred in terms of supplying heat to the reaction vessel 130 by combusting offgas in the combustion part 120, and one end (lower end) fixed structure is adopted, in which one end of the fuel cell 110 is connected to the hydrogen supplier 140 and the other end thereof is opened. However, the shape of the fuel cell 110 is not limited thereto, but various shapes can be adopted. For example, in a structure in which the amount of heat required for the dehydrogenation reaction can be provided only by the fuel cell 110, a flat plate type fuel cell, etc., may be adopted.

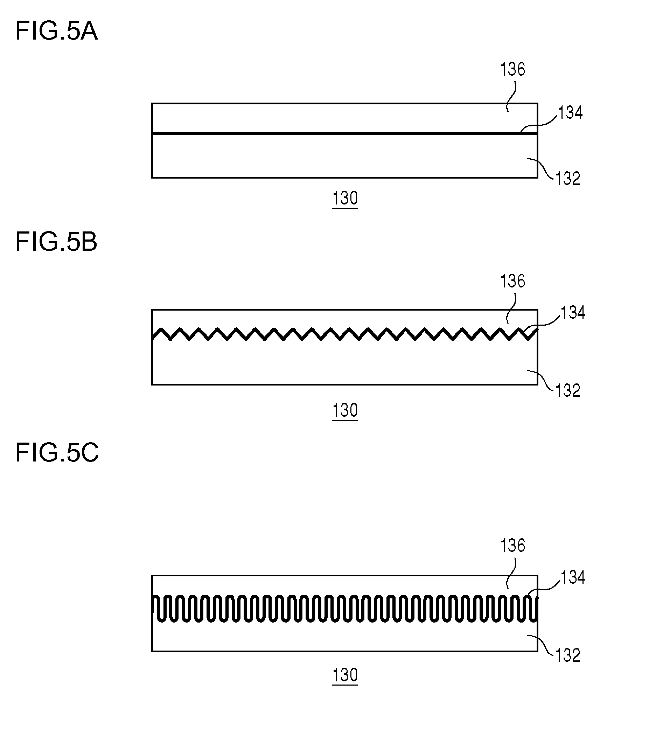

The reaction vessel 130 includes, in its inside, a dehydrogenation reaction part 132, a hydrogen separator 134, and a hydrogen chamber 136. In the present embodiment, the film-shaped hydrogen separator 134 defines the hydrogen chamber 136. As illustrated, for example, in Figs. 2 and 5, the inside of the reaction vessel 130 is divided into two spaces by the film-shaped hydrogen separator 134, one space of which forms the dehydrogenation reaction part 132 and the other space of which forms the hydrogen chamber 136.

The dehydrogenation reaction part 132 has: a dehydrogenation catalyst 132a with which the aforementioned one space is filled; a supply port 132b for MCH supplied from the outside of the reaction vessel 130, namely, from the hydride storage tank 10; and a discharge port 132c from which TL produced by the dehydrogenation reaction of a hydride is discharged. The dehydrogenation reaction part 132 performs the dehydrogenation reaction of MCH that has flowed in from the supply port 132b by a catalytic reaction caused by the dehydrogenation catalyst 132a. Thereby, mixed gas containing hydrogen gas and gaseous TL is obtained from MCH. Examples of the dehydrogenation catalyst 132a include solid catalyst beds in each of which a metal having a dehydrogenation activity, such as Pt, Rh, Ru, Pd, Ni, or the like, and if necessary, an auxiliary catalyst for inhibiting coke formation on the catalyst, such as K₂O, Rb₂O, Cs₂O, MgO, CaO, SrO, BaO, Sc₂O₃, Y₂O₃, La₂O3, CeO₂, or the like, are supported on a support such as alumina. Alternatively, part of the hydrogen, which has been produced in the dehydrogenation reaction part 132 and been separated in the hydrogen separator 134, may be supplied to the dehydrogenation reaction part 132 in order to inhibit the coke formation on the catalyst.

When the dehydrogenation catalyst 132a is a Pt catalyst supported on alumina, the catalytic reaction temperature (T₁) is preferably 250°C ≤ T₁ ≤ 500°C, and more preferably 300°C ≤ T₁ ≤ 450°C. By making the catalytic reaction temperature 250°C or higher, a reaction rate, at around which a practical dehydrogenation reaction can be performed, can be more surely obtained. Additionally, by making the catalytic reaction temperature 500°C or lower, a demethylation reaction of MCH or carbon deposition reaction, which is a competitive reaction with the dehydrogenation reaction, can be suppressed from being caused. The dehydrogenation reaction part 132 is heated by the heat generated in the fuel cell 110 and/or the heat generated by the combustion of the offgas from the fuel cell 110, so that the temperature of the dehydrogenation reaction part 132 is maintained at the catalytic reaction temperature. A conversion ratio from a hydride to a dehydrogenated product in the dehydrogenation reaction part 132 is preferably 90% or more, more preferably 93% or more, and still more preferably 95% or more.

The temperature of the dehydrogenation reaction part 132 and that of the fuel cell 110 are considered to be major targets to be controlled in the fuel cell module 20, but it is preferable that at least the temperature of the dehydrogenation reaction part 132 is controlled so as to be within a predetermined temperature range by monitoring the temperature at a predetermined portion in the dehydrogenation reaction part 132 with the use of a temperature measuring device such as a thermocouple. When the temperature of the dehydrogenation reaction part 132 becomes, for example, lower than 250°C, an amount of surplus hydrogen that is not consumed in the fuel cell 110 is increased in order to raise the temperature thereof. That is, the later-described Uf of the fuel cell 110 is reduced. Specifically, Uf is reduced, for example, by increasing an input amount of MCH to the fuel cell module 20 or by reducing a sweep current in the fuel cell 110, etc. When the temperature of the dehydrogenation reaction part 132 is higher than 500°C, Uf is increased within a range not exceeding the allowable maximum of the fuel cell 110 in order to lower the temperature thereof. Specifically, the control, for example, contrary to the case where Uf is reduced is performed.

The hydrogen separator 134 separates the hydrogen, produced in the dehydrogenation reaction part 132, from TL as a dehydrogenated product produced simultaneously. As described above, in the present embodiment, the hydrogen separator 134 is formed by a hydrogen separation membrane, and fuel gas whose maj or component is hydrogen is produced with the hydrogen separation membrane selectively permeating hydrogen from mixed gas containing the hydrogen and TL. Examples of the hydrogen separation membrane that forms the hydrogen separator 134 include: metal thin films such as Pd; porous membranes such as silica and zeolite; and the like. As a preferred example of the hydrogen separation membrane, a silica thin film formed by CVD (Chemical Vapor Deposition) (Mikihiro Nomura, "Surface Technology" vol. 59, No. 1, p 28 (2008)) can be cited.

In general, examples of a material that can be used as the fuel include: in the case of from low-temperature to moderate-temperature full cells, only hydrogen; and in the case of high-temperature fuel cells such as SOFC, hydrogen and carbon monoxide. In a high-temperature fuel cell, when reformed gas obtained by a steam reforming reaction is used as the fuel and when surplus moisture is contained in the reformer outlet gas, methane and lower hydrocarbons can also be used as the fuel. On the other hand, in the present embodiment, the fuel cell 110 is an SOFC whose operating temperature is relatively high, but moisture is not contained in the fuel gas to be supplied to the fuel cell 110, and hence a material that can be used as the fuel is basically only hydrogen.

Accordingly, if the concentration of hydrocarbons contained in the fuel gas is high, there is the concern that carbon deposition (coking), etc., may be caused in the fuel cell, thereby degradation failure of the fuel cell maybe caused. Accordingly, it is desirable that, in the fuel gas to be supplied to the fuel cell 110, the content of TL and that of carbon-containing compounds, such as methane and benzene, etc., that are produced by a side reaction occurring in the dehydrogenation reaction part 132, are smaller than or equal to certain ranges. When the fuel cell 110 is an SOFC, a molar fraction of TL contained in the gas that has passed through the hydrogen separator 134 is preferably 5% or less, more preferably 3% or less, and still more preferably 1% or less, from the aforementioned viewpoint.

In the present embodiment, the hydrogen separator 134 extends almost in parallel to a direction in which MCH flows in at the supply port 132b in the dehydrogenation reaction part 132. And, the whole surface of the reaction vessel 130, the surface facing toward the combustion part 120, is caused to serve as the dehydrogenation reaction part 132. Thereby, the heat transfer from the fuel cell 110 and/or the combustion part 120 to the dehydrogenation reaction part 132 can be performed more surely, and the whole dehydrogenation reaction part 132 can be heated more uniformly. Further, an effective permeation area of the hydrogen separator 134 can be secured. The aforementioned "almost parallel" means that: the direction in which the hydrogen separator 134 extends, in other words, the straight line connecting together the end portion of the hydrogen separator 134, the end portion being located on the upstream side in a direction in which MHC flows in, and the other end portion thereof, the other end portion being located on the downstream side, is almost parallel to the direction in which MHC flows in; herein, when the hydrogen separator 134 has, for example, a zigzag shape illustrated in Fig. 5 (B) or a pleat shape illustrated in Fig. 5(C), a local tilt in the hydrogen separator 134 is not taken into consideration.

The hydrogen separator 134 forms part of partition walls of the dehydrogenation reaction part 132, and separates hydrogen from TL in the fuel cell module 20. Thereby, a loss in the enthalpy of the high-temperature hydrogen gas can be further reduced, in comparison with a structure in which mixed gas containing hydrogen and TL is taken out from the dehydrogenation reaction part 132 to the outside of the fuel cell module 20 such that the hydrogen and TL are separated from each other there.

The gas whose major component is the gaseous TL separated in the hydrogen separator 134, namely, the gas that has not passed through the hydrogen separator 134 is sent out to the condenser 50 from the discharge port 132c in the dehydrogenation reaction part 132. TL is then separated from the gas by being liquefied by the condenser 50, as described above, and is recovered in the dehydrogenated product containing tank 60.

The gas whose major component is the hydrogen separated in the hydrogen separator 134, namely, the gas that has passed through the hydrogen separator 134 flows into the hydrogen chamber 136 located adjacently to the dehydrogenation reaction part 132, the hydrogen separator 134 being sandwiched by the dehydrogenation reaction part 132 and the hydrogen chamber 136 (the arrows in Fig. 2 indicate the flow of this gas). The upper end of a pipe portion 144 that forms the hydrogen supplier 140 is connected to the hydrogen chamber 136. Accordingly, the hydrogen chamber 136 functions as a gas flow channel connecting the hydrogen separator 134 and the pipe portion 144 of the hydrogen supplier 140 together.

The dehydrogenation reaction part 132 is arranged above the fuel cell 110, and the hydrogen separator 134 is arranged above the dehydrogenation reaction part 132. That is, one major surface of the dehydrogenation reaction part 132 serves as a heat-receiving surface from the fuel cell 110 and/or the combustion part 120, and the hydrogen separator 134 is arranged on the other major surface thereof, opposite to the heat-receiving surface. The hydrogen chamber 136 is arranged on one major surface of the hydrogen separator 134, the one major surface being opposite to the dehydrogenation reaction part 132. Thereby, the dehydrogenation reaction of MCH introduced from the supply port 132b is gradually initiated from the upstream side in a direction in which a hydride flows, and the produced hydrogen is separated from TL by passing through the hydrogen separator 134 and moves into the hydrogen chamber 136, a space for recovering hydrogen. Because a state of equilibrium in the dehydrogenation reaction part 132 is shifted due to a movement of the hydrogen from the dehydrogenation reaction part 132 to the hydrogen chamber 136, the dehydrogenation reaction of MCH can be caused to proceed almost completely.

The hydrogen gas, which has been separated from TL by the hydrogen separator 134 and has flowed into the hydrogen chamber 136, is sent out to the hydrogen supplier 140. The hydrogen supplier 140 has the hydrogen flow channel 142 (fuel cell gas manifold) and the pipe portion 144 (duct). The hydrogen flow channel 142 is provided in the pedestal 150, as described above, and one end of the flow channel 142 branches into multiple channels, each of which is connected to the lower end of each fuel cell 110. The pipe portion 144 extends in the vertical direction such that the lower end is connected to the other end of the hydrogen flow channel 142 and the upper end is connected to the hydrogen chamber 136. The hydrogen that has flowed into the hydrogen chamber 136 is supplied to the fuel cell 110 after passing through the pipe portion 144 and the hydrogen flow channel 142.

In the fuel cell module 20 according to the present embodiment, the fuel cell 110, the combustion part 120, the reaction vessel 130 including the dehydrogenation reaction part 132 and the hydrogen separator 134, and the hydrogen supplier 140 are housed in the single housing 100. By arranging the fuel cell 110 and the reaction vessel 130 for producing the fuel to be supplied to the fuel cell 110 in a single insulated space in this way, the hydrogen produced by the dehydrogenation reaction of a hydride can be supplied to the fuel cell 110 without reducing the enthalpy of the hydrogen. Thereby, power can be taken out from a hydride at a high energy conversion efficiency and at a practical power density. Further, the surplus heat emitted from the fuel cell 110 can be efficiently provided to the dehydrogenation reaction part 132. Thereby, the dehydrogenation reaction of a hydride, performed by the dehydrogenation reaction part 132, and the power generation by the fuel cell 110 can be caused to proceed efficiently.

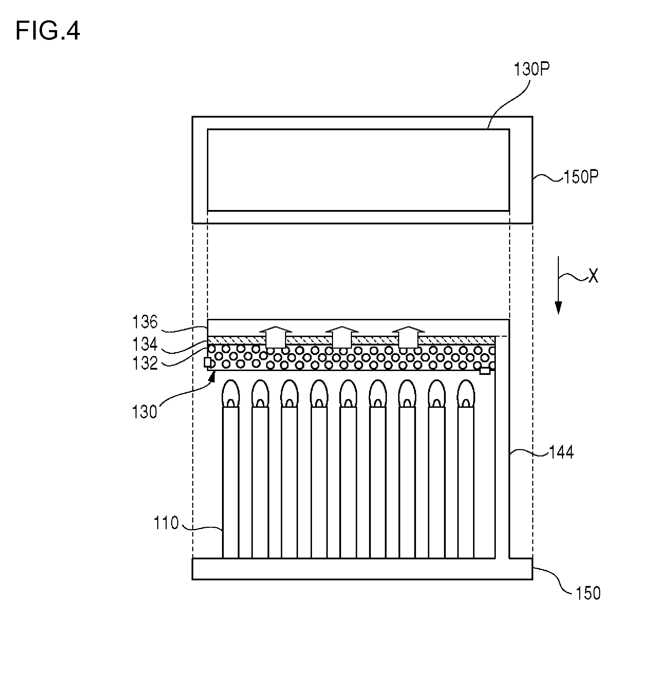

Herein, the sizes of the pedestal 150 and the reaction vessel 130 in the fuel cell module 20 will be described with reference to Fig. 4. Fig. 4 is a conceptual view for explaining the sizes thereof. The area per rated power of a projected plane 150P of the pedestal 150 is preferably from 1000 to 10000 cm²/kW, more preferably from 2000 to 8000 cm²/kW, and still more preferably from 3000 to 7000 cm²/kW, from the viewpoint of suppressing an increase in the installation area of the fuel cell module 20. For example, when the width of the projected plane 150P of the pedestal 150 is approximately 105 mm and the length thereof is approximately 350 mm in an SOFC with a power generation specification of 1 kw class (DC 800 W), the area of the projected plane 150P is approximately 3675 cm² and the area per rated power is approximately 4600 cm²/kw.

The area of a projected plane 130P of the reaction vessel 130 in the X direction perpendicular to the major surface of the pedestal 150, is preferably from 0.5 to 1.35 times, more preferably from 0.6 to 1.2 times, and still more preferably from 0.7 to 1.1 times, based on the area of the projected plane 150p of the pedestal 150 in the X direction, the latter area being an area per rated power of the fuel cell module 20.

By making the area of the projected plane 130P 0.5 times or more based on the area per rated power of the projected plane 150P, a shortage of supply of fuel to the fuel cell 110 can be more surely prevented from occurring. Additionally, by making the area of the projected plane 130P 1.35 times or less based on the area per rated power of the projected plane 150P, the fuel cell 110 and the reaction vessel 130 can be integrated with each other, while an increase in the size of the fuel cell module 20 is being suppressed. That is, the reaction vessel 130 is housed in the housing 100 by determining the size of the housing 100 based on the size of the pedestal 150, in other words, based on the size of the installation area of a plurality of the fuel cells 110, thereby allowing the fuel cells 110 and the reaction vessel 130 to be integrated with each other. It is also preferable that, when the fuel cell module 20 is viewed from the X direction, the reaction vessel 130 is included within the outline of the pedestal 150.

Subsequently, a fuel utilization rate and an air utilization rate in the fuel cell 110 will be described. A ratio of the hydrogen consumed by power generation to the hydrogen supplied to the fuel cell 110 is defined as a fuel utilization rate (hereinafter, appropriately referred to as "Uf"). Also, in the present embodiment, a ratio of the oxygen utilized for power generation to the oxygen contained in the air that is an oxidizing agent is defined as an air utilization rate (hereinafter, appropriately referred to as "Ua").

Uf is preferably from 60 to 99%, more preferably from 70 to 98%, and still more preferably from 75 to 97%. By making Uf 60% or more, the supplied fuel gas is effectively utilized in the fuel cell 110, so that an energy conversion efficiency (power generation efficiency) can be increased to an extent where the practicality of the fuel cell 110 is acquired. Additionally, by making Uf 99% or less, the offgas to be supplied to the combustion part 120 can be secured, and thereby an amount of heat required for the dehydrogenation reaction can be supplied to the dehydrogenation reaction part 132 more surely. When the fuel cell module 20 includes a plurality of fuel cell laminated bodies, one or more cells may not be sufficiently supplied with the fuel gas; however, by making Uf 99% or less, the fuel gas can be sufficiently delivered to these one or more cells, thereby allowing reoxidation, etc., of the anode, which may deteriorate the performance of the fuel cell, to be avoided.

Ua is not particularly limited as far as it does not exceed 100%, but it is preferable that Ua is from 10 to 50%, from the viewpoints of an energy conversion efficiency and suppression of deterioration in the cell.

Subsequently, pressure conditions in the dehydrogenation reaction part 132 will be described. The dehydrogenation reaction of MCH is one for producing hydrogen. Accordingly, when the pressure in the dehydrogenation reaction part 132 is increased, a reverse reaction is performed in preference to the dehydrogenation reaction such that chemical equilibrium is attained. Accordingly, it is originally preferable that the pressure in the dehydrogenation reaction part 132 is close to normal pressure. However, because the hydrogen separator 134, which is dependent on pressure, is provided in the subsequent stage of the dehydrogenation reaction part 132, it is desirable that the pressure on the retentate side, namely, the pressure in the dehydrogenation reaction part 132 is caused to be higher than that on the permeate side, namely, the pressure on the fuel cell 110 side. Because the pressure in a fuel flow channel (hydrogen circulation space 110a) in the fuel cell 110 is considered to be approximately normal pressure, it can be assumed that the gauge pressure in the dehydrogenation reaction part 132 (pressure in the dehydrogenation reaction part 132 based on normal pressure) is, as it is, a pressure difference required for making hydrogen gas pass through the hydrogen separator 134. The gauge pressure in the dehydrogenation reaction part 132 is preferably from 10 to 600 kPa, and more preferably from 20 to 300 kPa. The gauge pressure in the dehydrogenation reaction part 132 can be controlled by adjusting the flow rate of MCH, etc., with the use, for example, of the pump 80. When the gauge pressure in the dehydrogenation reaction part 132 is increased, the portion between the pump 80 and the pressure regulator 34 becomes a high-pressure region.

The required gauge pressure in the dehydrogenation reaction part 132 is dependent on: the hydrogen permeation coefficient of the hydrogen separator 134; and the ratio (membrane surface roughness) of the effective permeation area of the hydrogen separation membrane that forms the hydrogen separator 134 to the projected area of the hydrogen separation membrane in the X direction. The hydrogen permeation coefficient of the hydrogen separator 134 is preferably 1.0 × 10⁻⁷ mol/m²/s/Pa or more, more preferably 2.0 × 10⁻⁷ mol/m²/s/Pa, and still more preferably 3.0 × 10⁻⁷ mol/m²/s/Pa. Additionally, the effective permeation area of one major surface of the hydrogen separator 134, the one major surface being on the side of the dehydrogenation reaction part 132, is preferably 1.2 times or more, and more preferably 1.4 times or more, based on the projected area in the aforementioned X direction. Herein, the "effective permeation area" means the area of a region in the hydrogen separator 134, where hydrogen is separated when mixed gas containing the hydrogen and TL contacts the region; and in the case of a hydrogen separation membrane having, for example, the later-described zigzag shape or pleat shape, the "effective permeation area" corresponds to the actual area of the membrane, occurring when the major surface of the membrane is spread.

As an example, a model is set as follows: an input amount of MCH is 13.2 g/min (1676 W in H₂ conversion of methylhydroquinone) ; heat energy generated in the combustion part 120 is 56 W; heat energy generated in the fuel cell 110 is 564 W; heat energy consumed in the dehydrogenation reaction part 132 is -420 W (62.6 kJ/mol-H2); and a heat loss in the fuel cell module 20 is -200 W. The model is further set as follows: an output of the fuel cell 110 is DC 1000 W and AC 900 W; the number of the installed fuel cells is 100; voltage per fuel cell is 800 mV (64% LHV (Lower Heating Value)); current is 12.5 A; Uf is 96.5%; and a hydrogen flow rate required in the hydrogen separator 134 is 9.02 NLM (normal liter/min). Herein, power generation efficiency is 61.6% LHV (DC) and 55.5% LHV (AC). Additionally, the hydrogen separation membrane that forms the hydrogen separator 134 is a silica CVD film having the maximum of a hydrogen permeation coefficient is 4.3 × 10⁻⁷ mol/m²/s/Pa.

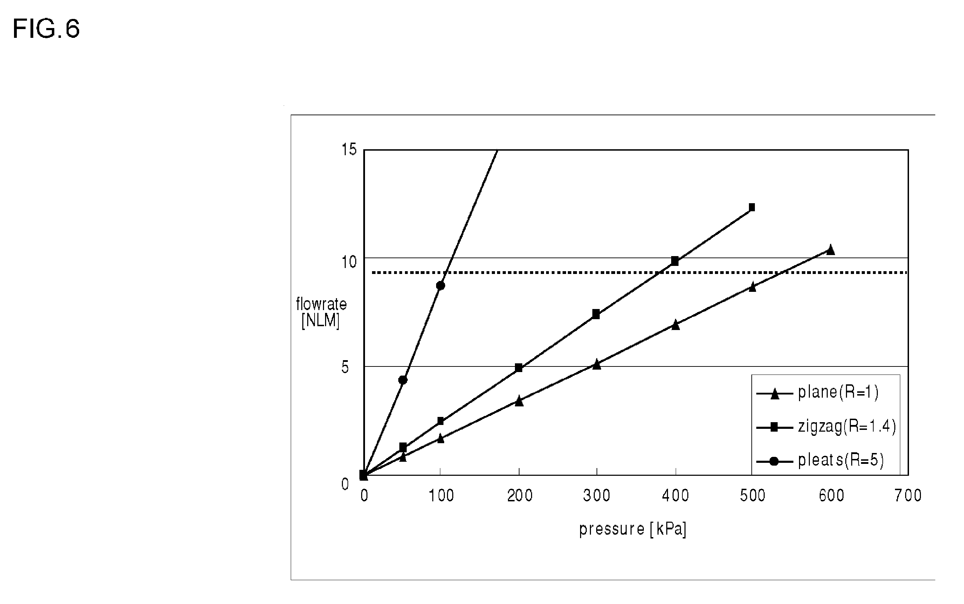

In this model, the relationship between the roughness of the silica CVD film and the gauge pressure in the dehydrogenation reaction part 132, required for obtaining a necessary amount of hydrogen of 9.02 NLM, is as follows. Figs. 5(A) to 5(C) are schematic views for explaining the shape of a film in the hydrogen separator. Fig. 6 is a graph showing the relationship between the gauge pressure in the dehydrogenation reaction part and hydrogen flow rates in the hydrogen separator. In Fig. 6, the vertical axis represents the hydrogen flow rate (NLM) in the hydrogen separator 134 in which the film has each of the shapes, and the horizontal axis represents the gauge pressure (kPa) in the dehydrogenation reaction part 132. The dashed line shows the points where the hydrogen flow rate is 9.02 NLM.

Examples of the shape of the film in the hydrogen separator 134 include a plane shape illustrated in Fig. 5(A); a zigzag shape illustrated in Fig. 5(B); a pleat shape illustrated in Fig. 5(C); and the like. In the hydrogen separator 134 having the plane shape illustrated in Fig. 5(A), the ratio R of the effective permeation area to the projected area in the X direction is 1. In the hydrogen separator 134 having the zigzag shape illustrated in Fig. 5(B), the ratio R of the effective permeation area to the projected area is 1.4. In the hydrogen separator 134 having the pleat shape illustrated in Fig. 5(C), the ratio R of the effective permeation area to the projected area is 5.

With respect to the hydrogen separators 134 having the respective shapes, changes in the hydrogen flow rate, occurring when the gauge pressure in the dehydrogenation reaction part 132 is changed, are shown in Fig. 6: in the hydrogen separator 134 having a plane shape, in which R is 1, the required hydrogen flow rate of 9.02 NLM is reached when the gauge pressure in the dehydrogenation reaction part 132 is close to 550 kPa; in the hydrogen separator 134 having the zigzag shape, in which R is 1.4, the required hydrogen flow rate is reached when the gauge pressure is close to 400 kPa; and in the hydrogen separator 134 having the pleat shape, in which R is 5, the required hydrogen flow rate is reached when the gauge pressure is close to 100 kPa.

That is, the gauge pressure in the dehydrogenation reaction part 132 can be further reduced by increasing the ratio R of the effective permeation area to the projected area. Thereby, the procession of a reverse reaction of the dehydrogenation reaction in the dehydrogenation reaction part 132 can be suppressed, and hence hydrogen can be efficiently produced in the dehydrogenation reaction part 132, which leads to miniaturization of the dehydrogenation reaction part 132, and eventually of the reaction vessel 130. As a result, the fuel cell 110 and the reaction vessel 130 can be integrated with each other, while an increase in the installation area of the fuel cell module 20 is being suppressed.

In the fuel cell module 20 according to the present embodiment, the fuel cell 110, the dehydrogenation reaction part 132, the hydrogen separator 134, and the hydrogen supplier 140 are housed in the single housing 100 to be integrated with each other, and the dehydrogenation reaction part 132 is heated by at least one of the heat generated in the fuel cell 110 and that generated by the combustion of offgas, as described above. That is, in the fuel cell module 20 according to the embodiment, the heat generated in the fuel cell 110 and/or that generated by the combustion of offgas are (is) supplied to the dehydrogenation reaction part 132 that produces the fuel for the fuel cell 110, and hence the dehydrogenation reaction in the dehydrogenation reaction part 132 can be caused to proceed stably. Additionally, the hydrogen and a dehydrogenated product, which are produced by the dehydrogenation reaction, are separated from each other in the fuel cell module 20, and hence the hydrogen can be supplied to the fuel cell 110, without reducing the enthalpy of the hydrogen. Further, this hydrogen is supplied to the fuel cell 110, and hence power generation can be stably performed in the fuel cell 110. Accordingly, the dehydrogenation reaction of an organic hydride and power generation by the fuel cell 110 can be caused to proceed efficiently.

### (Embodiment 2)

A fuel cell system 1 according to Embodiment 2 has the same structure as the fuel cell system 1 according to Embodiment 1, except that the second exhaust gas processor 32 is not included. Hereinafter, the fuel cell system 1 according to the present embodiment will be described, centering on the structures different from Embodiment 1. The same structures as those in Embodiment 1 will be denoted with the same reference numerals, and the description and illustration thereof will be appropriately omitted.

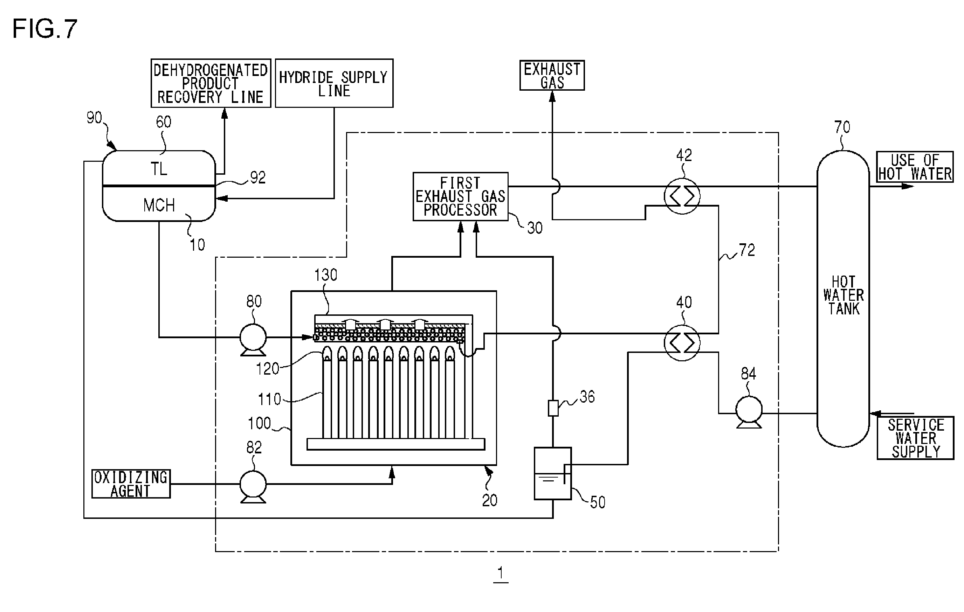

Fig. 7 is a schematic view illustrating a schematic structure of a fuel cell system according to Embodiment 2. As illustrated in Fig. 7, the fuel cell system 1 according to the present embodiment comprises a hydride storage tank 10, a fuel cell module 20, a first exhaust gas processor 30, a first heat exchanger 40, a second heat exchanger 42, a condenser 50, a dehydrogenated product containing tank 60, and a hot water tank 70.

The hydride storage tank 10 stores, as a hydride, MCH to be supplied to the fuel cell module 20. MCH is sent out to the fuel cell module 20 from the hydride storage tank 10 by a pump 80. The fuel cell module 20 includes a structure in which a fuel cell 110, a combustion part 120, and a reaction vessel 130 etc., are housed in a housing 100 to be integrated with each other. MCH supplied from the hydride storage tank 10 is used for a dehydrogenation reaction in the reaction vessel 130, and thereby hydrogen and TL are produced. The produced hydrogen is separated from TL and is supplied to the fuel cell 110. An oxidizing agent, such as air, is also supplied to the fuel cell 110 from the outside by a pump 82. The fuel cell 110 generates power by an electrochemical reaction with the use of the supplied hydrogen and oxidizing agent, and discharges offgas to an internal space in the housing 100. The combustion part 120 combusts the offgas in the internal space.

The combustion exhaust gas produced by the combustion of the offgas by the combustion part 120 is discharged into the first exhaust gas processor 30 and is completely combusted there. The gaseous TL separated from hydrogen in the reaction vessel 130 is sent out to the condenser 50 and becomes a liquid by being condensed there, thereby allowing it to be separated from other gas. The separated gaseous TL is sent out to the dehydrogenated product containing tank 60 from the condenser 50. The TL, contained in the dehydrogenated product containing tank 60, is sent out to an external dehydrogenated product recovery line, and is used again for hydrogen transportation as a dehydrogenated product of an organic hydride. The gas, separated from the liquid TL in the condenser 50, is sent out to the first exhaust gas processor 30 after passing through a pressure regulator 36, and is then completely combusted there.

The pressure regulator 36 is formed, for example, by an orifice, a needle valve, and a capillary tube, etc. The mixed gas, present in a high-pressure state in the reaction vessel 130, is sent out to the condenser 50, while its pressure is being maintained. Accordingly, the pressure of the gas separated from TL in the condenser 50 is maintained to be high. The pressure of the gas is released in the pressure regulator 36, so that the pressure thereof becomes approximately normal pressure on the downstream side of the pressure regulator 36. Because the pressure on the upstream side of the pressure regulator 36 is high, the combustion exhaust gas in the fuel cell module 20 can be prevented from flowing backward from the first exhaust gas processor 30 toward the condenser 50. Further, because the pressure in the condenser 50 is high, the recovery rate of the gaseous TL can be increased. Furthermore, because the pressure of the gaseous TL is also high, it moves to the dehydrogenated product containing tank 60 from the condenser 50 by the pressure of its own. Accordingly, the pump 86 included in the fuel cell system 1 according to Embodiment 1 can be omitted.

Heat recovery water is stored in the hot water tank 70. A circulating flow channel 72 is also provided in the hot water tank 70. The heat recovery water in the hot water tank 70 is sent out to the circulating flow channel 72 by the pump 84, and is again returned to the hot water tank 70 after passing through the circulating flow channel 72. The first heat exchanger 40 and the second heat exchanger 42 are provided in the circulating flow channel 72 in this order from the upstream side in a direction in which the heat recovery water flows. In the first heat exchanger 40, heat exchange is performed between the mixed gas containing TL discharged from the reaction vessel 130 and heat recovery water. The heat recovery water heated in the first heat exchanger 40 is sent out to the second heat exchanger 42. In the second heat exchanger 42, heat exchange is performed between the combustion exhaust gas discharged from the first exhaust gas processor 30 and the heat recovery water, so that the heat recovery water is further heated. The heat recovery water that has passed through the second heat exchanger 42 is returned to the hot water tank 70. Thereby, hot water is stored in the hot water tank 70.

In the aforementioned fuel cell system 1 according to Embodiment 2, the same advantages as those in Embodiment 1 can also be acquired. Further, the second exhaust gas processor 32 is omitted in the fuel cell system 1 of the present embodiment, and hence the structure of the fuel cell system 1 can be simplified.

The present invention should not be limited to the aforementioned embodiments, and various modifications, such as design modifications, can be made with respect to the above embodiments based on the knowledge of those skilled in the art, and an embodiment with such a modification can fall within the scope of the present invention.

In each of the aforementioned embodiments, for example, the hydrogen separator 134 extends almost planarly in the reaction vessel 130, but the shape of the hydrogen separator 134 is not particularly limited thereto, and the shape may be, for example, tubular. In this case, for example, the inside of the tube of the hydrogen separator 134 can be used as the hydrogen chamber 136. A plurality of the tubular hydrogen separators 134 may be provided in the reaction vessel 130. In this case, the effective permeation area of the hydrogen separator 134 is the total area of the outer circumferential surfaces of the tubes. Additionally, for example, a space filled with the dehydrogenation catalyst 132a may be in non-contact with the hydrogen separator 134 by providing a mesh-shaped partition plate between the hydrogen separator 134 and the dehydrogenation catalyst 132a.

### DESCRIPTION OF THE REFERENCE NUMERALS

- 1: FUEL CELL SYSTEM
- 20: FUEL CELL MODULE
- 40: FIRST HEAT EXCHANGER
- 42: SECOND HEAT EXCHANGER
- 50: CONDENSER
- 60: DEHYDROGENATED PRODUCT CONTAINING TANK
- 70: HOT WATER TANK
- 100: HOUSING
- 102: LOWER SPACE
- 110: FUEL CELL
- 120: COMBUSTION PART
- 130: REACTION VESSEL
- 130P: PROJECTED PLANE
- 132: DEHYDROGENATION REACTION PART
- 132A: DEHYDROGENATION CATALYST
- 132B: SUPPLY PORT
- 134: HYDROGEN SEPARATOR
- 136: HYDROGEN CHAMBER
- 140: HYDROGEN SUPPLIER
- 142: HYDROGEN FLOW CHANNEL
- 144: PIPE PORTION
- 150: PEDESTAL
- 150P: PROJECTED PLANE

### INDUSTRIAL APPLICABILITY

The present invention can be used for fuel cell modules and fuel cell systems.

## Claims

1. A fuel cell module comprising:
a fuel cell;
a dehydrogenation reaction part that performs a dehydrogenation reaction of a hydride of an aromatic compound;
a hydrogen separator that separates hydrogen, which has been produced in the dehydrogenation reaction part, from a dehydrogenated product of the hydride;
a hydrogen supplier that supplies the hydrogen separated in the hydrogen separator to the fuel cell;
a single housing that houses the fuel cell, the dehydrogenation reaction part, the hydrogen separator, and the hydrogen supplier, wherein
the dehydrogenation reaction part is heated by at least one of heat generated in the fuel cell and heat generated by combustion of offgas from the fuel cell.

2. The fuel cell module according to claim 1 comprising:
a reaction vessel including, in its inside, the dehydrogenation reaction part and the hydrogen separator, wherein
the hydrogen separator is film-shaped and defines in the reaction vessel a hydrogen chamber into which the hydrogen separated in the hydrogen separator flows.

3. The fuel cell module according to claim 2, wherein
the hydrogen separator divides the inside of the reaction vessel into two spaces, and wherein
one space of the spaces forms the dehydrogenation reaction part by being filled with a dehydrogenation catalyst, and wherein
the other space forms a hydrogen chamber into which the hydrogen separated in the hydrogen separator flows.

4. The fuel cell module according to claim 2 or claim 3, wherein
the dehydrogenation reaction part is arranged above the fuel cell, and wherein
the hydrogen separator is arranged above the dehydrogenation reaction part.

5. The fuel cell module according to any one of claims 2 to 4, wherein
the dehydrogenation reaction part has a supply port for the hydride supplied from the outside of the reaction vessel, and wherein
the hydrogen separator extends almost in parallel to a direction into which the hydride flows at the supply port.

6. The fuel cell module according to any one of claims 2 to 5 comprising:
a pedestal, on a major surface of which the fuel cell is mounted, wherein
the hydrogen supplier has both a hydrogen flow channel provided in the pedestal and a pipe portion that connects the hydrogen flow channel and the hydrogen chamber together.

7. The fuel cell module according to claim 6, wherein
an area of a projected plane of the reaction vessel in a direction perpendicular to the major surface of the pedestal, is from 0.5 to 1.35 times based on an area of a projected plane of the pedestal in the direction, the latter area being an area per rated power of the fuel cell module.

8. The fuel cell module according to claim 7, wherein
an effective permeation area of a major surface of the hydrogen separator, the major surface being on the dehydrogenation reaction part side, is 1.2 times or more based on a projected area of the hydrogen separator in the perpendicular direction.

9. The fuel cell module according to any one of claims 1 to 8, wherein
a hydrogen permeation coefficient of the hydrogen separator is 1.0 × 10⁻⁷ mol/m²/s/Pa or more.

10. The fuel cell module according to any one of claims 1 to 9, wherein
a conversion ratio from the hydride to the dehydrogenated product in the dehydrogenation reaction part is 90% or more.

11. The fuel cell module according to any one of claims 1 to 10, wherein
a molar fraction of the dehydrogenated product contained in gas that has passed through the hydrogen separator is 5% or less.

12. The fuel cell module according to any one of claims 1 to 11 further comprising:
a combustion part that combusts offgas from the fuel cell, wherein
the fuel cell discharges the offgas to a lower space of the dehydrogenation reaction part in the housing, and wherein
the combustion part combusts the offgas in the lower space.

13. The fuel cell module according to claim 12, wherein
the fuel cell has a tubular shape, one end of which is connected to the hydrogen supplier and the other end of which is opened in the lower space, and the combustion part is arranged on the other end side.

14. The fuel cell module according to any one of claims 1 to 13, wherein
the fuel cell is a tubular type solid oxide fuel cell or a tubular flat-plate type solid oxide fuel cell.

15. A fuel cell system comprising:
the fuel cell module according to any one of claims 1 to 14;
a condenser that condenses the gaseous dehydrogenated product separated in the hydrogen separator; and
a dehydrogenated product containing tank that contains the liquid dehydrogenated product produced in the condenser.

16. The fuel cell system according to claim 15 further comprising:
a storage tank for a heat medium; and
a heat exchanger that performs heat exchange between the gaseous dehydrogenated product and the heat medium.

17. The fuel cell system according to claim 16 further comprising:
a second heat exchanger that is provided on a downstream side of the heat exchanger in a direction in which the heat medium flows, and that performs heat exchange between combustion exhaust gas of the offgas and the heat medium.
